# EUROPEAN PATENT SPECIFICATION

(11) **EP 1 930 182 B1**
(45) Date of publication and mention of the grant of the patent: **21.04.2010**
(21) Application number: 06025069.3
(22) Date of filing: 05.12.2006
(51) Int. Cl.: B60B 27/02

(54) **Bicycle hub having enhanced strength**
Fahrradnabe mit erhöhter Festigkeit
Moyeu de bicyclette possédant une résistance améliorée

(43) Date of publication of application: 11.06.2008
(73) Proprietor: Chosen Co., Ltd., Sheng Sei Shung, Changhua Hsien (TW)
(72) Inventor: Chen, Ching-Shu, Changhua City Chanhua County (TW)
(74) Representative: Reichel, Wolfgang

(56) References cited:
- EP-A- 1 559 584
- EP-A- 1 695 842
- US-A1- 2003 198 418
- US-A1- 2003 198 419

## Description

The present invention relates to a hub and, more particularly, to a hub for a bicycle.

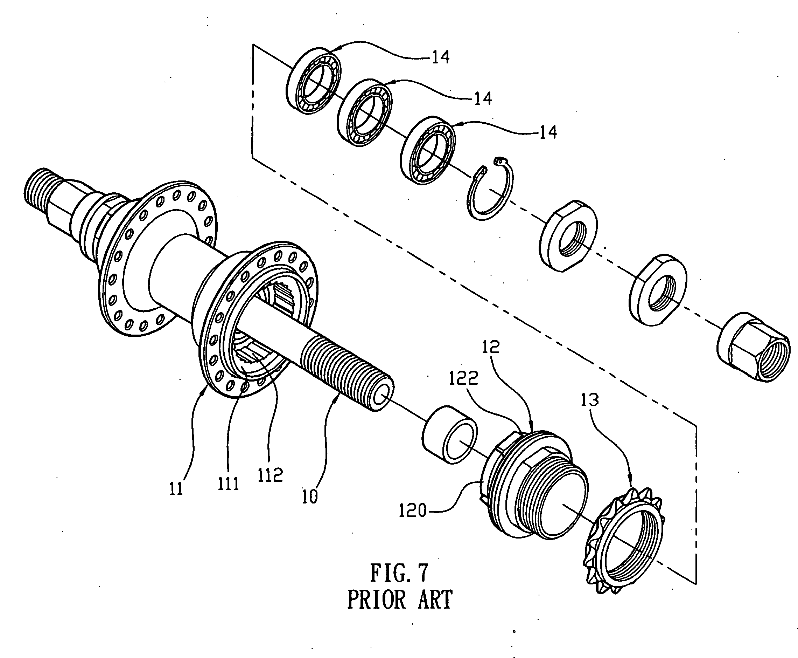

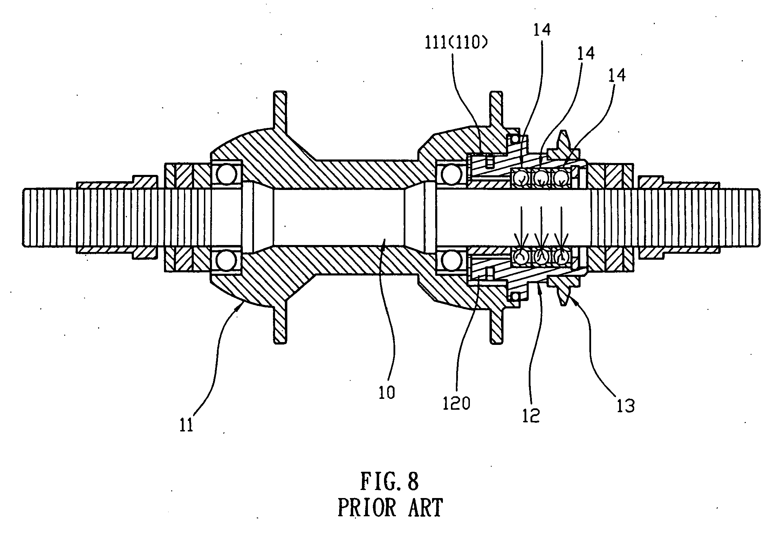

A conventional ratchet hub for a bicycle in accordance with the prior 5 art shown in Figs. 7 and 8 comprises a shaft 10, a hub body 11 rotatably mounted on the shaft 10 and having an inside formed with a fixing recess 110, a locking ring 111 secured in the fixing recess 110 of the hub body 11 to drive and rotate the hub body 11 and having an inside formed with a plurality of oneway ratchet teeth 112, a drive seat 12 rotatably mounted on the shaft 10 and having an end face 120 extended into the locking ring 111 and formed with a plurality of receiving slots 122, a plurality of pawl members (not shown) each pivotally mounted in the respective receiving slot 122 of the drive seat 12 and each meshing with the oneway ratchet teeth 112 of the locking ring 111, and a plurality of ball bearings 14 mounted between the drive seat 12 and the shaft 10.

In assembly, the hub body 11 is connected to a wheel (not shown) of the bicycle, the shaft 10 is connected to a frame (not shown) of the bicycle, the drive seat 12 is connected to a freewheel 13 of the bicycle, and the freewheel 13 of the bicycle is driven by a chain (not shown) which is driven by a 20 chainwheel (not shown) which is driven by a pedal (not shown) that is pedalled by a rider.

In operation, when the freewheel 13 is rotated normally, the drive seat 12 is rotated with the freewheel 13 to move the pawl members. At this time, the pawl members are locked in the oneway ratchet teeth 112 of the locking ring 111, so that the locking ring 111 is rotated by the drive seat 12 to rotate the hub body 11 which rotates the wheel. On the other hand, when the freewheel 13 stops rotating or when the rotation speed of the wheel is greater than that of the freewheel 13 (when the bicycle is moved on a downward slope), the rotation speed of the locking ring 111 is greater than that of the drive seat 12, so that the oneway ratchet teeth 112 of the locking ring 111 press each of the pawl members. Thus, the drive seat 12 performs an idle rotation, so that the locking ring 111 and the hub body 11 are not rotated by the drive seat 12 and will not interfere with rotation of the drive seat 12. When the rotation speed of the drive seat 12 (or the freewheel 13) is greater than that of the hub body 11 (or the wheel), the locking ring 111 and the hub body 11 are rotated by the drive seat 12 again.

However, when an external force is applied to the hub due to a violent hit or jump, the external force applied on the hub is entirely supported by the ball bearings 14 as shown in Fig. 8, so that the ball bearings 14 are easily distorted or deformed due to a stress concentration, thereby decreasing the lifetime of the ball bearings 14. In addition, when the ball bearings 14 are worn out or even broken, the shaft 10 is easily damaged by the broken pieces of the ball bearings 14, thereby decreasing the lifetime of the shaft 10. Further, each of the ball bearings 14 has a larger size, so that the thickness of the hub cannot be changed freely according to practical requirements, thereby decreasing the versatility of the hub.

From US 2003/198418 a bicycle hub is known that is characterized by the features comprised in the preamble of claim 1 defining the present invention. In particular, the said document discloses a hub, comprising a shaft, a hub body rotatably mounted on the shaft a drive seat rotatably mounted on the shaft and having a first end face engaged with the hub body, a self-lubricating bearing mounted between the drive seat and the shaft and a bushing mounted between the self-lubricating bearing and the shaft where the self-lubricating bearing has an inner wall contacting with an outer wall of the bushing completely and an outer wall contacting with an inner wall of the drive seat completely.
A similar hub where the self-lubricating bearing has an inner wall contacting with an outer wall of the shaft completely and an outer wall contacting with an inner wall of the drive seat completely is known from US 2003/198419. Further bicycle hubs of related kind are known from EP 1695842 and EP 1559584.

The primary object of the present invention is to provide a bicycle hub having a greater strength.

Another object of the present invention is to provide a hub, wherein the self-lubricating bearing has an inner wall contacting an outer wall of the shaft or the bushing completely and an outer wall contacting an inner wall of the drive seat completely, so that an external force applied to the self-lubricating bearing is distributed evenly and smoothly to prevent the self-lubricating bearing from being distorted or deformed due to a stress concentration, thereby enhancing the lifetime of the self-lubricating bearing.

A further object of the present invention is to provide a hub, wherein an external force applied to the self-lubricating bearing is distributed evenly and smoothly, so that the hub has a greater strength and can withstand a greater stress.

A further object of the present invention is to provide a hub, wherein the self-lubricating bearing has a thickness which can be changed arbitrarily according to practical requirements, thereby enhancing the versatility of the hub.

In accordance of the invention there is provided a hub as defined in claim 1. Preferred embodiments of this hub can be taken from the subclaims.
Further benefits and advantages of the present invention will become apparent after a careful reading of the detailed description with appropriate reference to the accompanying drawings.

In the drawings:
- Figure 1: is a perspective view of a hub in accordance with a preferred embodiment of the present invention.
- Figure 2: is an exploded perspective view of the hub as shown in Fig. 1.
- Figure 3: is a plan cross-sectional view of the hub as shown in Fig. 1.
- Figure 4: is an exploded perspective view of a hub in accordance with another preferred embodiment of the present invention.
- Figure 5: is a plan cross-sectional assembly view of the hub as shown in Fig. 4.
- Figure 6: is an exploded perspective view of a hub in accordance with another preferred embodiment of the present invention.
- Figure 7: is an exploded perspective view of a conventional hub in accordance with the prior art.
- Figure 8: is a plan cross-sectional assembly view of the conventional hub as shown in Fig. 7.

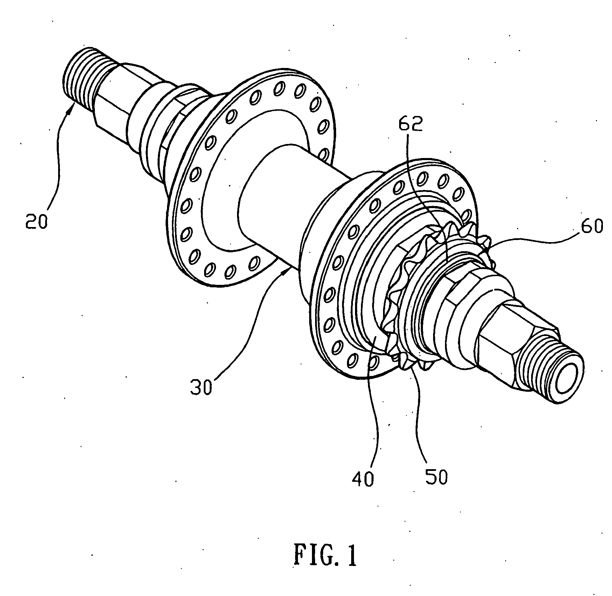

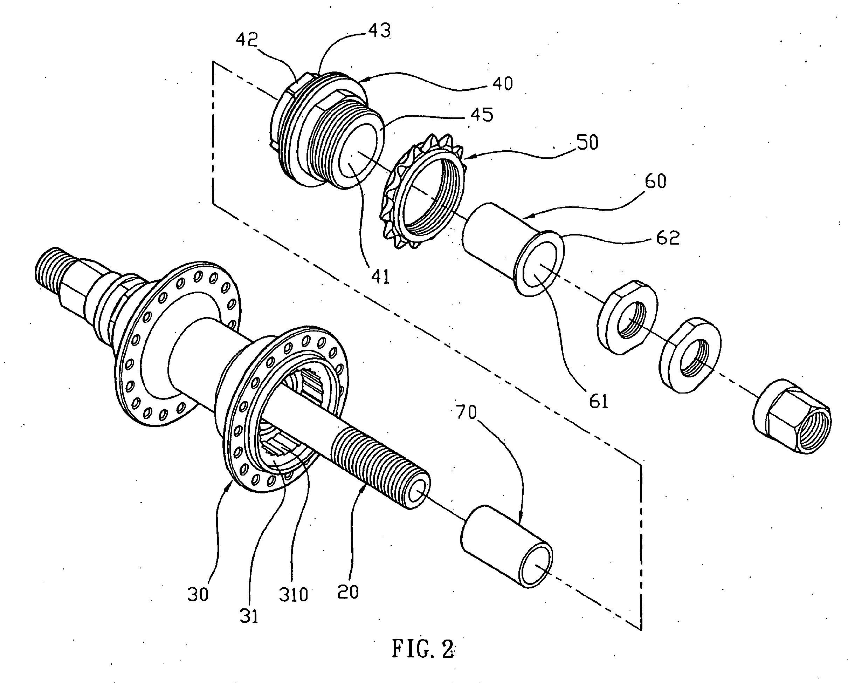

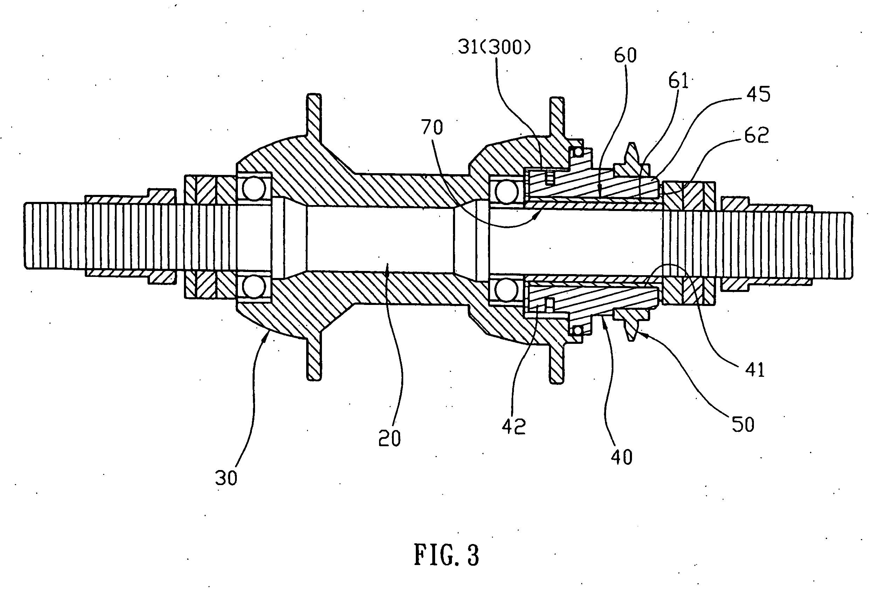

Referring to the drawings and initially to Figs. 1-3, a hub for a bicycle in accordance with a preferred embodiment of the present invention comprises a shaft 20, a hub body 30 rotatably mounted on the shaft 20 and having an inside formed with a fixing recess 300, a locking ring 31 secured in the fixing recess 300 of the hub body 30 to drive and rotate the hub body 30 and having an inside formed with a plurality of oneway ratchet teeth 310, a drive seat 40 rotatably mounted on the shaft 20 and having a first end face 42 extended into the locking ring 31 and formed with a plurality of receiving slots 43, a plurality of pawl members (not shown) each pivotally mounted in the respective receiving slot 43 of the drive seat 40 and each meshing with the oneway ratchet teeth 310 of the locking ring 31, and a self-lubricating bearing 60 mounted between the drive seat 40 and the shaft 20.

In the preferred embodiment of the present invention, the hub further comprises a bushing 70 mounted between the self-lubricating bearing 60 and the shaft 20 to prevent the self-lubricating bearing 60 from directly contacting with the shaft 20 made of metal.

The drive seat 40 has an inside formed with a mounting hole 41. The self-lubricating bearing 60 is inserted into the mounting hole 41 of the drive seat 40. The self-lubricating bearing 60 has a substantially cylindrical shape and has a diameter corresponding to that of the mounting hole 41 of the drive seat 40. The self-lubricating bearing 60 has a length corresponding to that of the drive seat 40 and an end portion formed with a radially and outwardly extending limit flange 62 rested on a second end face 45 of the drive seat 40.

The self-lubricating bearing 60 has an inside formed with a mounting bore 61 to allow passage of the shaft 20 and the bushing 70. Thus, the self-lubricating bearing 60 is rotatably mounted between the drive seat 40 and the shaft 20 to reduce the rotation wear and resistance between the drive seat 40 and the shaft 20 to a minimum.

In assembly, the hub body 30 is connected to a wheel (not shown) of the bicycle, the shaft 20 is connected to a frame (not shown) of the bicycle, the drive seat 40 is connected to a freewheel 50 of the bicycle, and the freewheel 50 of the bicycle is driven by a chain (not shown) which is driven by a chainwheel (not shown) which is driven by a pedal (not shown) that is pedalled by a rider.

In operation, when the freewheel 50 is rotated normally, the drive seat 40 is rotated with the freewheel 50 to move the pawl members. At this time, the pawl members are locked in the oneway ratchet teeth 112 of the locking ring 31, so that the locking ring 31 is rotated by the drive seat 40 to rotate the hub body 30 which rotates the wheel. On the contrary, when the freewheel 50 stops rotating or when the rotation speed of the wheel is greater than that of the freewheel 50 (when the bicycle is moved on a downward slope), the rotation speed of the locking ring 31 is greater than that of the drive seat 40, so that the oneway ratchet teeth 112 of the locking ring 31 press each of the pawl members. Thus, the drive seat 40 performs an idle rotation, so that the locking ring 31 and the hub body 30 are not rotated by the drive seat 40 and will not interfere with rotation of the drive seat 40. When the rotation speed of the drive seat 40 (or the freewheel 50) is greater than that of the hub body 30 (or the wheel), the locking ring 31 and the hub body 30 are rotated by the drive seat 40 again.

Accordingly, the self-lubricating bearing 60 has an inner wall contacting with an outer wall of the shaft 20 or the bushing 70 completely and an outer wall contacting with an inner wall of the drive seat 40 completely, so that an external force applied to the self-lubricating bearing 60 is distributed evenly and smoothly to prevent the self-lubricating bearing 60 from being distorted or deformed due to a stress concentration, thereby enhancing the lifetime of the self-lubricating bearing 60. In addition, the external force applied to the self-lubricating bearing 60 is distributed evenly and smoothly, so that the hub has a greater strength and can withstand a greater stress. Further, the self-lubricating bearing 60 has a thickness which can be changed arbitrarily, so that the thickness of the hub can be changed freely according to practical requirements, thereby enhancing the versatility of the hub.

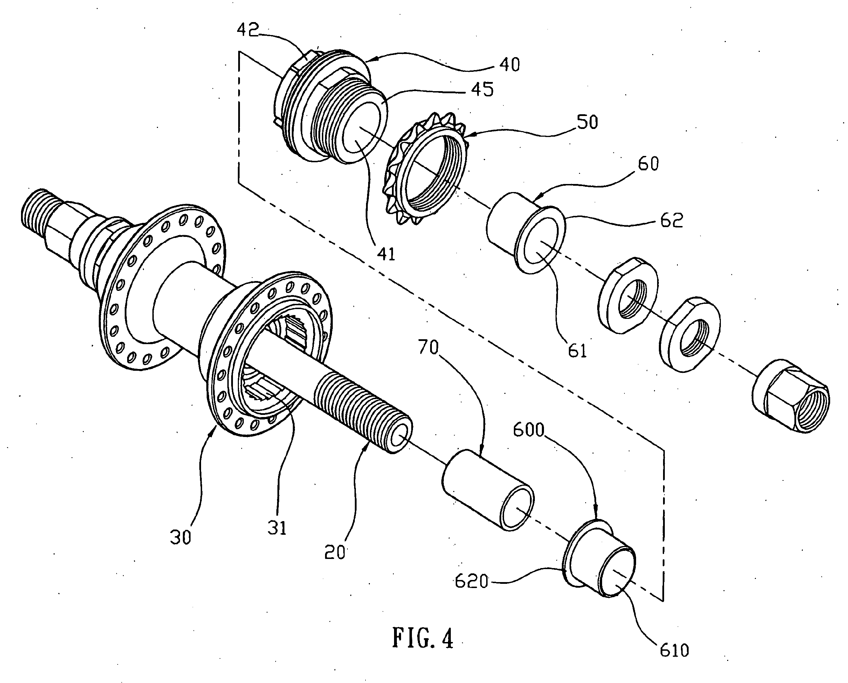

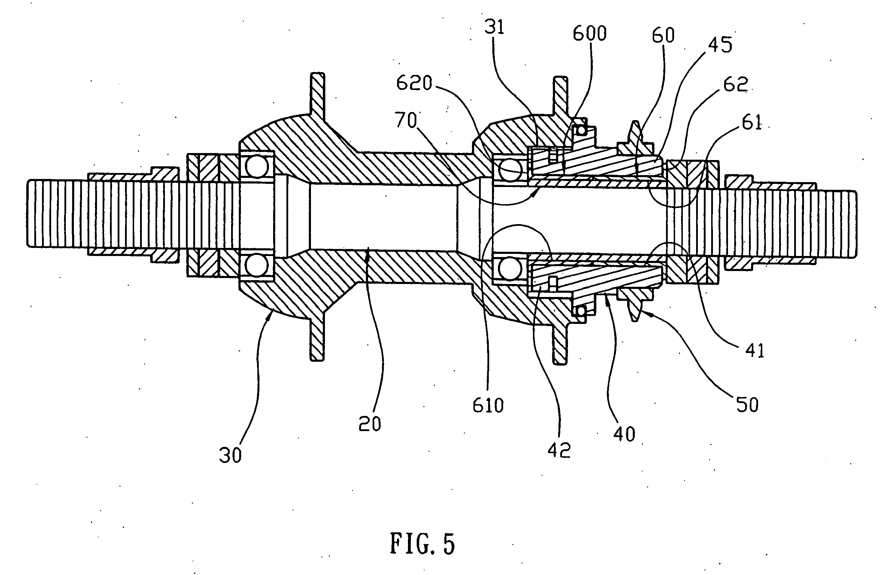

Referring to Figs. 4 and 5, the hub further comprises a secondary self-lubricating bearing 600 mounted between the drive seat 40 and the shaft 20 and juxtaposed to the self-lubricating bearing 60, and the bushing 70 is mounted between the secondary self-lubricating bearing 600 and the shaft 20 to prevent the secondary self-lubricating bearing 600 from directly contacting 20 with the shaft 20 made of metal.

The secondary self-lubricating bearing 600 is inserted into the mounting hole 41 of the drive seat 40. The secondary self-lubricating bearing 600 has a substantially cylindrical shape and has a diameter corresponding to that of the mounting hole 41 of the drive seat 40. The self-lubricating bearing 60 and the secondary self-lubricating bearing 600 have a total length corresponding to that of the drive seat 40. The secondary self-lubricating bearing 600 has an end portion formed with a radially and outwardly extending limit flange 620 rested on the first end face 42 of the drive seat 40. The secondary self-lubricating bearing 600 has an inside formed with a mounting bore 610 to allow passage of the shaft 20 and the bushing 70. Thus, the secondary self-lubricating bearing 600 is rotatably mounted between the drive seat 40 and the shaft 20 to reduce the rotation wear and resistance between the drive seat 40 and the shaft 20 to a minimum.

Thus, the secondary self-lubricating bearing 600 has an inner wall contacting with an outer wall of the shaft 20 or the bushing 70 completely and an outer wall contacting with an inner wall of the drive seat 40 completely, so that an external force applied to the secondary self-lubricating bearing 600 is distributed evenly and smoothly to prevent the secondary self-lubricating bearing 600 from being distorted or deformed due to a stress concentration, thereby enhancing the lifetime of the secondary self-lubricating bearing 600.

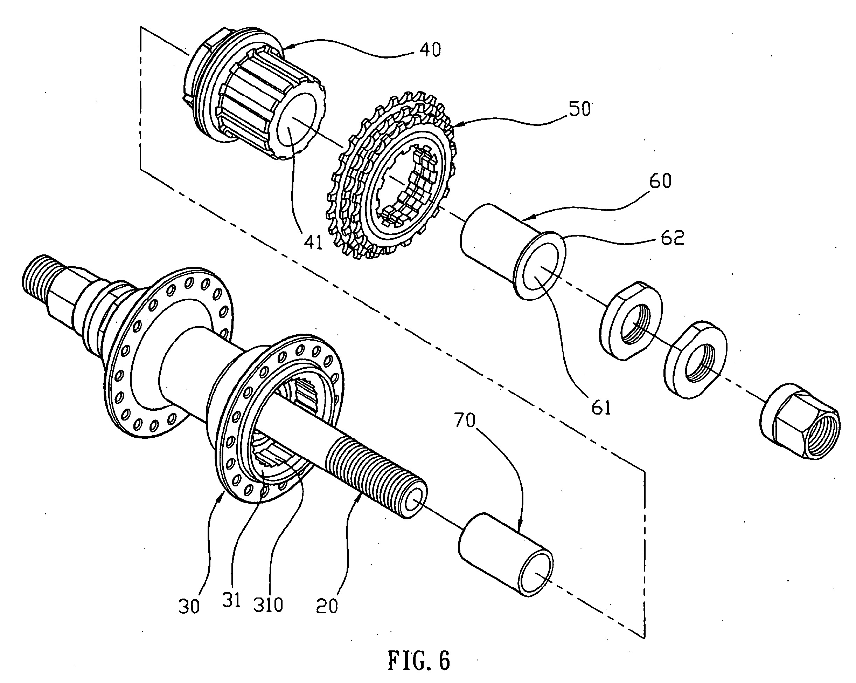

Referring to Fig. 6, each of the drive seat 40 and the freewheel 50 has a different shape.

## Claims

1. A hub, comprising:
a shaft (20);
a hub body (30) rotatably mounted on the shaft (20);
a drive seat (40) rotatably mounted on the shaft (20) and having a first end face engaged with the hub body (30); a self-lubricating bearing (60) mounted between the drive seat (40) and the shaft (20); and a bushing (70) mounted between the self-lubricating bearing (60) and the shaft (20), wherein the self-lubricating bearing (60) has an inner wall contacting with an outer wall of the bushing (70) completely and an outer wall contacting with an inner wall of the drive seat (40) completely,
**characterized in that**
the self-lubricating bearing (60) has a length corressponding to that of the drive seat (40), an end portion is formed with a radially and outwardly extending limit flange (62), the limit flange being rested on a second end face (45) of the drive seat (40), and an inner wall contacting with an outer wall of the shaft (20) completely and an outer wall contacting with an inner wall of the drive seat (40) completely.

2. The hub in accordance with claim 1, further comprising a secondary self-lubricating bearing (600) mounted between the drive seat (40) and the shaft (20) and juxtaposed to the self-lubricating bearing (60).

3. The hub in accordance with claim 2, wherein the secondary self-lubricating bearing (600) has an end portion formed with a radially and outwardly extending limit flange (620) rested on the first end face (42) of the drive seat (40).

4. The hub in accordance with claim 2, further comprising a bushing (70) mounted between the self-lubricating bearing (60), the secondary self-lubricating bearing (600) and the shaft (20).

5. The hub in accordance with claim 2, wherein the secondary self-lubricating bearing (600) has an inner wall contacting with an outer wall of the shaft (20) and an outer wall contacting with an inner wall of the drive seat (40).

## Patentansprüche

1. Nabe aufweisend
eine Achse (20),
einen Nabenkörper (30), der auf der Achse (20) drehbar angebracht ist;
ein Antriebsauflager (40), das auf der Achse (20) drehbar angebracht ist und das eine erste Abschlußfläche aufweist, die in den Nabenkörper (30) eingreift; ein selbstschmierendes Lager (60), das zwischen dem Antriebsauflager (40) und der Achse (20) angebracht ist; und eine Hülse (70), die zwischen dem selbstschmierenden Lager (60) und der Achse (20) angebracht ist, wobei das selbstschmierende Lager (60) eine Innenwand aufweist, die mit einer Außenwand der Hülse (70) vollständig in Berührung ist, und eine Außenwand, die mit der Innenwand des Antriebsauflagers (40) vollständig in Berührung ist,
**dadurch gekennzeichnet, dass**
das selbstschmierende Lager (60) eine Länge aufweist, die der des Antriebsauflagers (40) entspricht, dass sein einer Endabschnitt mit einem radialen und nach außen ragenden Begrenzungsflansch (62) versehen ist, dass der Begrenzungsflansch auf einer zweiten Endfläche (45) des Antriebsauflagers (40) ruht und dass seine Innenwand mit einer Außenwand der Achse (20) vollständig in Berührung ist und dass eine Außenwand mit einer Innenwand des Antriebsauflagers (40) vollständig in Berührung ist.

2. Nabe nach Anspruch 1 ferner aufweisend ein zweites selbstschmierendes Lager (600) das zwischen dem Antriebsauflager (40) und der Achse (20) angebracht ist und zwar angelagert an das selbstschmierende Lager (60).

3. Nabe nach Anspruch 2,
**dadurch gekennzeichnet, dass** das zweite selbstschmierende Lager (600) einen Endabschnitt aufweist, der mit einem radialen und nach außen ragenden Begrenzungsflansch (620) versehen ist, der auf der ersten Endfläche (42) des Antriebsauflagers (40) ruht.

4. Nabe nach Anspruch 2, ferner **gekennzeichnet durch** eine Hülse (70), die zwischen dem selbstschmierenden Lager (60), dem zweiten selbstschmierenden Lager (600) und der Achse (20) angebracht ist.

5. Nabe nach Anspruch 2, **dadurch gekennzeichnet, dass** das zweite selbstschmierende Lager (600) eine Innenwand aufweist, die eine Außenwand der Achse (20) berührt, und eine Außenwand, die eine Innenwand des Antriebsauflagers (40)berührt.

## Revendications

1. Un moyeu, comportant:
un arbre (20);
un corps de moyeu (30) monté sur l'arbre (20) et mobile en rotation;
un support d'entraînement (40) monté sur l'arbre (20) et mobile en rotation, et ayant un première face terminale en prise avec le corps de moyeu (30); un palier autolubrifiant (60) monté entre le support d'entraînement (40) et l'arbre (20), et un manchon (70) monté entre le palier autolubrifiant (60) et l'arbre (20), dans lequel le palier autolubrifiant (60) présente une paroi intérieure complètement en contact avec une paroi extérieure du manchon (70) et une paroi extérieure complètement en contact avec une paroi intérieure du support d'entraînement (40) ;
**caractérisé en ce que** le palier autolubrifiant (60) présente une longueur correspondant à celle du support d'entraînement (40), une partie terminale (15) formée avec une bride de limite (62) radialement en déport, la bride de limite (62) prenant appui sur une seconde face terminale (45) du support d'entrainement (40), et une paroi intérieure en contact complet avec une paroi extérieure de l'arbre (20) et une paroi extérieure en contact complet avec une paroi intérieure du support d'entraînement.

2. Le moyeu selon la revendication 1, comportant en outre un second palier autolubrifiant (600) monté entre le support d'entraînement (40) et l'arbre (20) et juxtaposé au palier autolubrifiant (60).

3. Le moyeu selon la revendication 2, dans lequel le second palier autolubrifiant (600) présente une partie terminale formée avec une bride de limite (620), radialement en déport , prenant appui sur la première face terminale (42) du support d'entraînement (40).

4. Le moyeu selon la revendication 2, comportant en outre un manchon (70) monté entre le palier autolubrifiant (60), le second palier autolubrifiant (600) et l'arbre (20).

5. Le moyeu selon la revendication 2, dans lequel le second palier autolubrifiant (600) présente une paroi intérieure en contact avec une paroi extérieure de l'arbre (20) et une paroi extérieure en contact avec une paroi intérieure du support d'entraînement (40).
